# FASCICULE DE BREVET EUROPEEN

(11) **EP 0 369 850 B1**
(45) Date de publication et mention de la délivrance du brevet: **13.01.1993**
(21) Numéro de dépôt: 89402962.8
(22) Date de dépôt: 26.10.1989
(51) Int. Cl.: F16H 3/091

(54) **Boîte de vitesse**
Gangschaltgetriebe
Shift transmission

(30) Priorité: 15.11.1988 FR 8814807
(43) Date de publication de la demande: 23.05.1990
(73) Titulaire: AUTOMOBILES PEUGEOT, 75116 Paris (FR); AUTOMOBILES CITROEN, 92200 Neuilly-sur-Seine (FR)
(72) Inventeur: Chrétien, Philippe, F-78290 Croissy sur Seine (FR)
(74) Mandataire: Obolensky, Michel

(56) Documents cités:
- EP-A- 0 206 563
- EP-A- 0 224 407
- DE-A- 2 445 241
- DE-A- 3 404 045
- FR-A- 1 377 028
- FR-A- 2 216 139
- US-A- 4 116 082

## Description

La présente invention est relative à une boîte de vitesses du type comportant un arbre moteur d'entrée et un arbre parallèle récepteur de sortie portant chacun respectivement des pignons moteurs et des pignons récepteurs qui engrènent par paires pour constituer des couples de pignons moteur et récepteur dont chacun réalise un rapport de transmission entre l'arbre d'entrée et l'arbre de sortie, l'un des deux pignons de chacun des couples étant lié en rotation avec l'arbre qui le porte et l'autre des deux pignons étant monté libre en rotation sur l'arbre qui le porte et auquel il peut être lié en rotation pour réaliser un rapport de transmission.

Dans les boîtes de vitesses de véhicule automobile de ce type, la multiplication du nombre des rapports de transmission de marche avant entraîne un accroissement de la longueur axiale de la boîte de vitesses.

Cet accroissement de l'encombrement des boîtes de vitesses est particulièrement gênant pour la conception des véhicules automobiles dont le moteur est disposé transversalement et dont la boîte de vitesses est placée en bout du moteur, car le groupe motopropulseur que constitue cet ensemble possède une longueur axiale globale qui doit être comprise dans la zone d'aménagement délimitée par les positions opposées de braquage maximal des roues avant du véhicule.

La conception actuelle des boîtes de vitesses de ce type n'a, jusqu'à présent, pas permis de disposer de plus de cinq rapports de marche avant dans les véhicules de tourisme à groupe moto-propulseur transversal.

Il est donc souhaitable de pouvoir proposer une boîte de vitesses de structure classique et disposée au bout du moteur qui offre des possibilités cinématiques supplémentaires en ce qui concerne les rapports de démultiplication maximale ainsi qu'un nombre supérieur de rapports de marche avant.

Une première solution connue des documents EP-A-0224407 et EP-A-0206563 consiste à proposer une boîte de vitesses qui comporte un arbre intermédiaire, parallèle aux arbres d'entrée et de sortie, qui porte au moins un pignon intermédiaire qui engrène avec un desdits pignons moteurs, ou récepteurs, qui est lié en rotation à l'arbre moteur, ou récepteur, qui le porte, l'autre arbre récepteur, ou moteur, étant lié en rotation à l'arbre intermédiaire de manière à tourner dans le même sens, ledit pignon intermédiaire étant monté libre en rotation sur l'arbre intermédiaire qui le porte et auquel il peut être lié en rotation pour réaliser au moins un rapport supplémentaire de transmission.

La présente invention a pour but de proposer une conception simple, économique et compacte d'un tel type de boîte de vitesses.

Selon l'invention, les moyens de transmission qui assurent la liaison en rotation de l'arbre intermédiaire audit autre arbre récepteur, ou moteur, comprennent une chaîne de transmission

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique de la structure d'un premier mode de réalisation d'une boîte de vitesses conformément aux enseignements de l'invention ;
- la figure 2 est une vue en bout schématique simplifiée de la boîte de vitesses de la figure 1 ;
- la figure 3 représente la grille de commande de la boîte de vitesses représentée aux figures 1 et 2 ;
- la figure 4 est une vue similaire à celle de la figure 1 d'un second mode de réalisation d'une boîte de vitesses ;
- la figure 5 représente la grille de commande de la boîte de vitesses de la figure 4;
- la figure 6 est une vue similaire à celle de la figure 1 d'un troisième mode de réalisation d'une boîte de vitesses ;
- la figure 7 est une vue en bout, similaire à celle de la figure 2, de la boîte de vitesses de la figure 6 ;
- la figure 8 représente la grille de commande de la boîte de vitesses représentée aux figures 6 et 7 et ;
- la figure 9 est une vue similaire à celle de la figure 1 d'un quatrième mode de réalisation d'une boîte de vitesses.

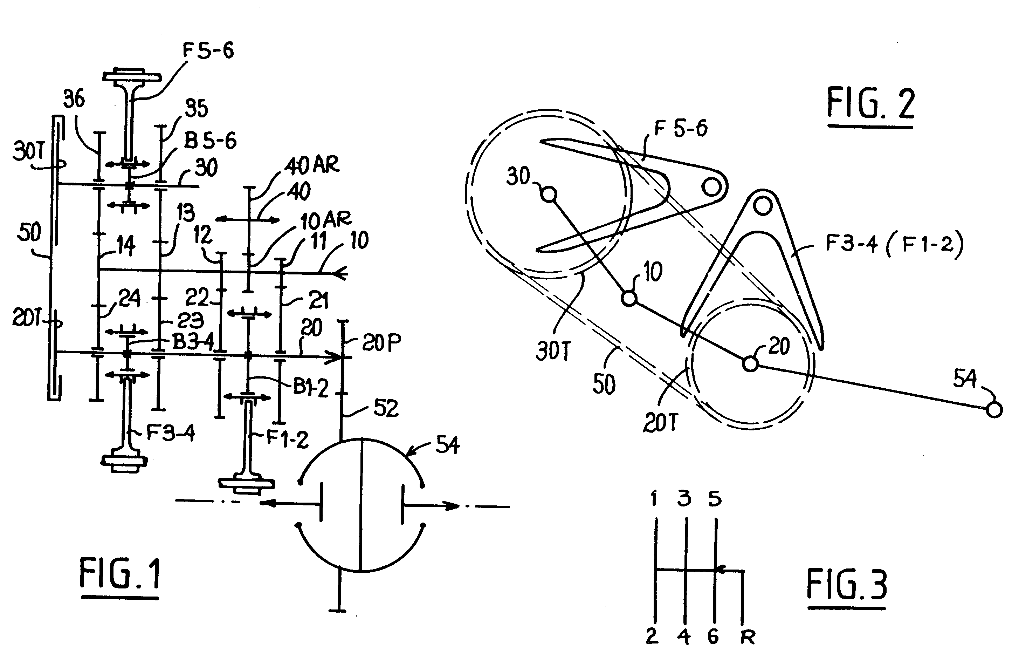

La boîte de vitesses représentée aux figures 1 et 2 comprend un arbre moteur d'entrée 10, un arbre récepteur de sortie 20, un arbre intermédiaire 30 et un arbre de marche arrière 40 qui sont tous les quatre parallèles entre eux.

L'arbre moteur d'entrée porte quatre pignons moteurs de marche avant 11 , 12, 13 et 14 ainsi qu'un pignon de marche arrière 10AR qui sont tous les cinq liés en rotation à l'arbre moteur 10.

L'arbre récepteur de sortie 20 porte quatre pignons récepteurs de marche avant 21 , 22, 23 et 24 qui sont tous montés libres en rotation sur l'arbre récepteur 20.

Un baladeur B1-2 est monté coulissant sur l'arbre récepteur 20 entre les pignons récepteurs 21 et 22. Le baladeur B1-2 est susceptible, sous l'action d'une fourchette de commande F1-2, de lier en rotation l'un ou l'autre des pignons récepteurs 21 ou 22 à l'arbre récepteur 20.

De la même manière un baladeur B3-4 est monté coulissant sur l'arbre récepteur 20 entre les deux pignons récepteurs 23 et 24. Le baladeur B3-4 est susceptible, sous l'action d'une fourchette de commande F3-4, de lier en rotation l'un ou l'autre des pignons récepteurs 23 ou 24 à l'arbre récepteur 20.

Les quatre premiers rapports de marche avant correspondent aux couples de pignons moteur-récepteur 11-21, 12-22, 13-23 et 14-24 respectivement.

L'arbre intermédiaire 30 porte un premier pignon intermédiaire 35 qui engrène avec le pignon récepteur 13 du troisième rapport de marche avant, et qui est identique au pignon récepteur 23 du troisième rapport de marche avant.

L'arbre intermédiaire 30 porte un second pignon intermédiaire 36 qui engrène avec le pignon récepteur 14 du quatrième rapport de marche avant, et qui est identique au pignon récepteur 24 du quatrième rapport de marche avant.

Un baladeur B5-6 est monté coulissant sur l'arbre intermédiaire 30 entre les pignons intermédiaires 35 et 36. Le baladeur B5-6 est susceptible, sous l'action d'une fourchette de commande F5-6, de lier en rotation l'un ou l'autre des deux pignons intermédiaires 35 et 36 a l'arbre intermédiaire 30 qui les porte et sur lequel ils sont normalement montés libres en rotation.

L'arbre intermédiaire 30 est lié en rotation à l'arbre de sortie 20 par une chaîne de transmission 50 qui coopère avec un pignon de transmission 30T porté par l'arbre intermédiaire 30 ainsi qu'avec un pignon de transmission 20T porté par l'arbre de sortie 20. Le nombre de dents du pignon de transmission 30T est supérieur à celui du pignon 20T de manière à ce que l'arbre de sortie soit entraîné par l'arbre intermédiaire à une vitesse de rotation supérieure à celle de ce dernier.

Le cinquième rapport de marche avant de la boîte de vitesses représenté aux figures 1 et 2 correspond au couple formé par le pignon moteur 13 du troisième rapport de marche avant qui engrène avec le premier pignon intermédiaire 35 porté par l'arbre récepteur 30.

Le sixième rapport de marche avant correspond au couple formé par le pignon moteur 14 du quatrième rapport de marche avant qui engrène avec le second pignon intermédiaire 36 porté par l'arbre intermédiaire.

L'arbre de marche arrière 40 porte un pignon de marche arrière 40AR qui engrène avec le pignon moteur 10AR porté par l'arbre moteur 10.

L'arbre de sortie 20 porte enfin un pignon de sortie 20P qui lui est lié en rotation et qui engrène avec une couronne de pont 52 du différentiel 54 de la transmission du véhicule automobile (non représenté) équipé de la boîte de vitesses.

En utilisant deux pignons intermédiaires 35 et 36 identiques aux pignons récepteurs 23 et 24 on a réalisé une boîte à six vitesses de structure compacte dans laquelle les chutes de régime entre les troisième et quatrième rapports et entre les cinquième et sixième rapports sont identiques.

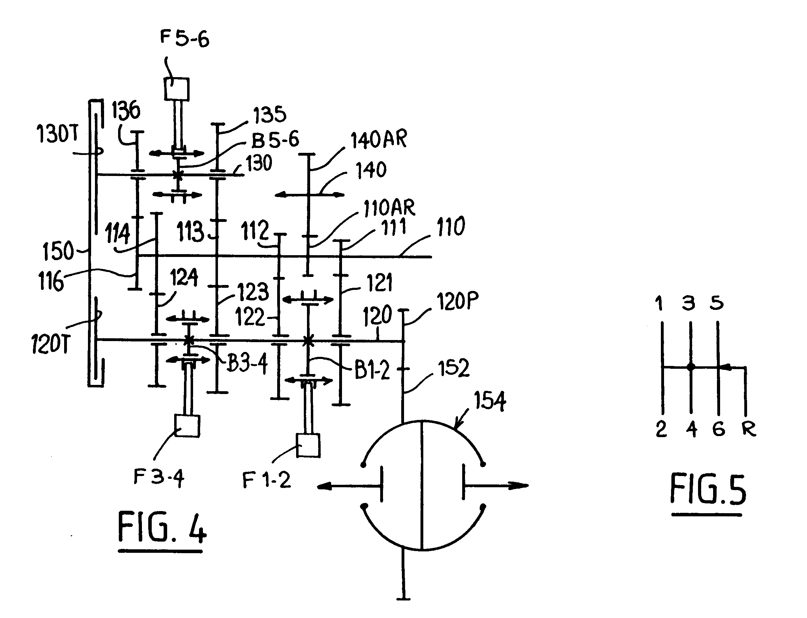

On décrira maintenant le second mode de réalisation d'une boîte de vitesses représentée à la figure 4 sur laquelle les éléments identiques ou similaires à ceux de la figure 1 sont désignés par les mêmes chiffres de référence augmentés de 100.

Dans ce second mode de réalisation, l'arbre intermédiaire 130 porte un premier pignon intermédiaire 135 monté libre en rotation sur l'arbre intermédiaire 130 qui engrène avec le pignon moteur 113 du troisième rapport de marche avant porté par l'arbre moteur 110 et qui est identique au pignon récepteur 123 du troisième rapport de marche avant porté par l'arbre de sortie 120.

Le second pignon intermédiaire 136 monté libre en rotation sur l'arbre intermédiaire 130 engrène avec un pignon moteur supplémentaire 116 lié en rotation avec l'arbre moteur 110 qui le porte.

L'arbre de sortie 120 est également entraîné en rotation par l'arbre intermédiaire 130 à une vitesse de rotation supérieure à celle de ce dernier.

Le cinquième rapport de marche avant est réalisé par le couple formé par le premier pignon intermédiaire 135 qui engrène avec le pignon moteur 113 de troisième rapport de marche avant.

Le sixième rapport de marche avant est réalisé par le couple formé du second pignon intermédiaire 136 qui engrène avec le pignon moteur supplémentaire 116 porté par l'arbre moteur 110.

Ce second mode de réalisation permet d'obtenir toute liberté d'étagement souhaitable de la boîte de vitesses tout en conservant un encombrement axial de la boîte identique à celui d'une boîte classique à cinq vitesses.

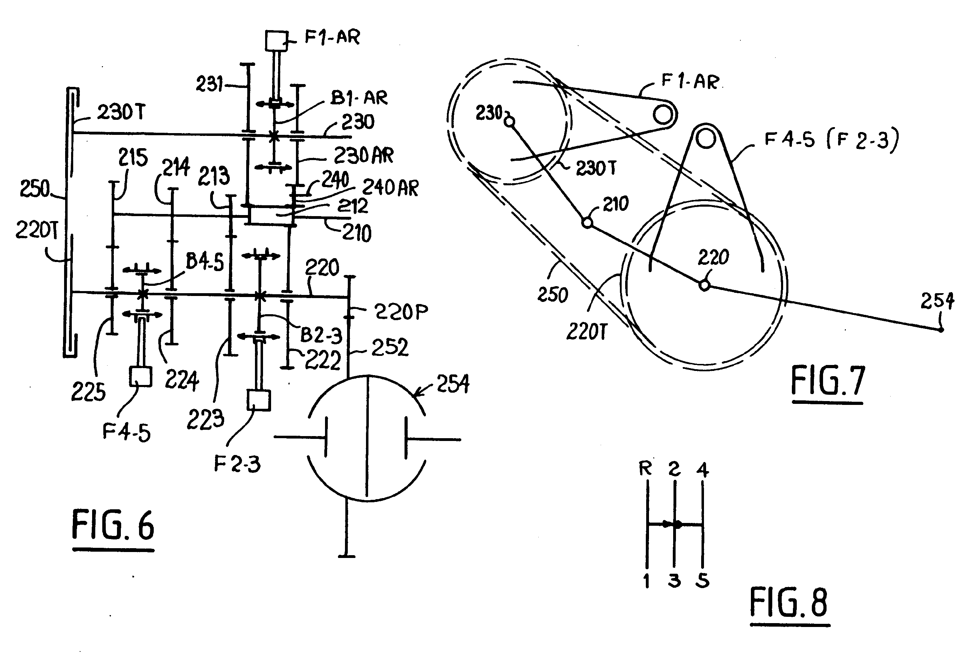

On décrira maintenant un troisième mode de réalisation d'une boîte de vitesses représentée aux figures 6 à 8 sur lesquelles les éléments identiques ou similaires à ceux de la boîte de vitesses représentée aux figures 1 à 3 sont désignés par les mêmes chiffres de référence augmentés de 200.

Dans ce mode de réalisation, l'arbre moteur d'entrée 210 porte quatre pignons moteur 212, 213, 214 et 215 qui lui sont liés en rotation.

L'arbre récepteur de sortie 220 porte quatre pignons récepteurs 222, 223, 224 et 225 qui sont montés libres en rotation sur l'arbre de sortie 220.

Un premier baladeur B2-3 est monté coulissant sur l'arbre de sortie 220 entre les deux pignons récepteurs 222 et 223. Le baladeur B2-3 est susceptible de lier en rotation l'un des deux pignons récepteurs 222 ou 223 à l'arbre de sortie 220 sous l'action d'une fourchette de commande F2-3.

De la même manière un second baladeur B4-5 est monté coulissant sur l'arbre de sortie 220 entre les deux pignons récepteurs 224 et 225. Le baladeur B4-5 est susceptible de lier en rotation l'un ou l'autre des deux pignons récepteurs 224 ou 225 à l'arbre de sortie 220 sous l'action d'une fourchette de commande F4-5.

Les deuxième, troisième, quatrième et cinquième rapports de marche avant de la boîte de vitesses sont réalisés par les couples de pignons moteur-récepteur 212-222, 213-223, 214-224 et 215-225 respectivement.

L'arbre intermédiaire 230 porte un premier pignon intermédiaire 231 qui est monté libre en rotation sur l'arbre intermédiaire 230 et qui engrène avec le pignon moteur 212 lié en rotation à l'arbre d'entrée 210.

Comme on peut le constater à la figure 6, le pignon moteur 212 possède une grande épaisseur axiale de façon à pouvoir engrener simultanément avec le pignon récepteur du second rapport de marche avant 222 ainsi qu'avec le premier pignon intermédiaire 231.

L'arbre intermédiaire 230 porte un second pignon intermédiaire 230AR également monté libre en rotation sur l'arbre intermédiaire 230.

Un baladeur B1-AR est monté coulissant sur l'arbre intermédiaire 230 entre les pignons intermédiaires 231 et 230AR. Le baladeur B1-AR est susceptible de lier en rotation l'un ou l'autre des deux pignons intermédiaires 231, ou 230 AR à l'arbre intermédiaire 230 sous l'action d'une fourchette de commande F1-AR.

Le second pignon intermédiaire 230AR engrène avec un pignon de marche arrière 240AR porté par l'arbre de marche arrière 240.

Le pignon de marche arrière 240AR engrène également avec le pignon moteur de grande épaisseur axiale 212 porté par l'arbre moteur 210.

Le premier rapport de marche avant est réalisé par le couple formé par le premier pignon intermédiaire 231 et le pignon moteur 212 du second rapport de marche avant.

Le pignon de transmission 230T porté par l'arbre intermédiaire 230 possède un nombre de dents inférieur a celui du nombre de transmission 220T porté par l'arbre de sortie 220 de façon à ce que l'arbre intermédiaire 230 entraîne l'arbre de sortie 220 à une vitesse de rotation inférieure à celle de l'arbre intermédiare 230.

Le premier pignon intermédiaire 231 permet donc de réaliser un rapport de transmission supplémentaire de rang inférieur à celui du pignon moteur 212 avec lequel il engrène.

Le rapport de transmission de marche arrière est réalisé par le couple formé par le second pignon intermédiaire 230AR et le pignon de marche arrière 240.

Grâce à la conception de ce troisième mode de réalisation représenté aux figures 6 à 8, on obtient une boîte à cinq rapports de marche avant ayant un premier rapport de marche avant ainsi qu'un rapport de marche arrière dits "ultra-courts".

La grille de commande de la boîte de vitesses représentée à la figure 8 est une grille décalée qui est notamment utilisable pour des véhicules utilitaires pour l'utilisation desquels le démarrage en second rapport de marche avant est couramment utilisé lorsque le véhicule est à vide.

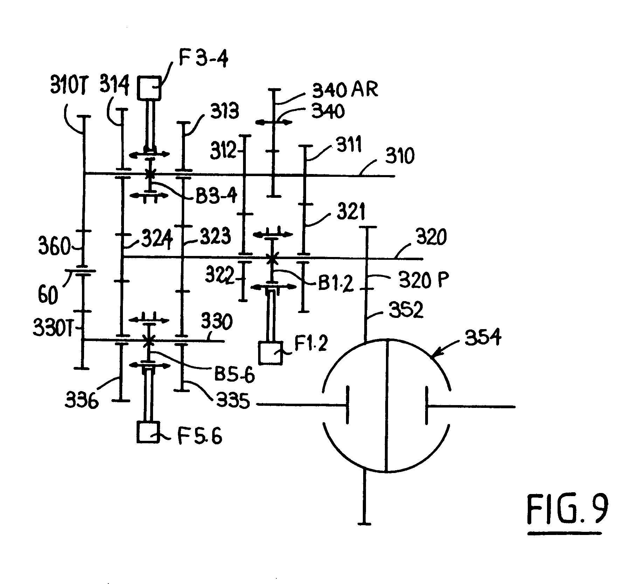

On décrira maintenant le quatrième mode de réalisation d'une boîte de vitesses représentée à la figure 9 sur laquelle les éléments identiques ou similaires à ceux de la boîte de vitesses représentés à la figure 1 sont désignés par les mêmes chiffres de référence augmentés de 300.

Dans ce quatrième mode de réalisation, l'arbre moteur 310 porte deux premiers pignons moteurs de marche avant 311 et 312 qui sont liés en rotation à l'arbre 310, puis un troisième et un quatrième pignons de marche avant 313 et 314 qui sont montés libres en rotation sur l'arbre moteur 310.

Un baladeur B3-4 est monté coulissant sur l'arbre moteur 310 entre les pignons moteur 313 et 314. Le baladeur B3-4 est susceptible de lier en rotation l'un ou l'autre des pignons moteurs 313 et 314 à l'arbre moteur 310 sous l'action d'une fourchette de commande F3-4.

L'arbre de sortie 320 porte un premier et un second pignons récepteurs 321 et 322 qui sont montés libres en rotation sur l'arbre récepteur 320, ainsi qu'un troisième et un quatrième pignons récepteurs 323 et 324 qui sont liés en rotation à l'arbre récepteur 320.

Un baladeur B1-2 est monté coulissant sur l'arbre récepteur 320 entre les pignons récepteurs 321 et 322. Le baladeur B1-2 est susceptible de lier en rotation l'un ou l'autre des pignons récepteurs 321 ou 322 à l'arbre de sortie 320 sous l'action d'une fourchette de commande F1-2.

Les quatre premiers rapports de marche avant sont réalisés par les couples de pignons moteur-récepteur 311-321, 312-322, 313-323 et 314-324 respectivement.

L'arbre intermédiaire 330 porte un premier pignon intermédiaire 335 qui engrène avec le pignon récepteur du troisième rapport de marche avant 323 et est identique au pignon moteur du troisième rapport de marche avant 313.

L'arbre intermédiaire 330 porte un second pignon intermédiaire 336 qui est également monté libre en rotation sur l'arbre intermédiaire 330. Le second pignon intermédiaire 336 engrène avec le pignon récepteur du quatrième rapport de marche avant 324 et est identique au pignon moteur 314 de quatrième rapport de marche avant.

L'arbre intermédiaire 330 est entraîné en rotation par l'arbre moteur d'entrée 310 au moyen d'une cascade de pignons. Cette cascade de pignons comprend un premier pignon de transmission 310T lié en rotation à l'arbre moteur 310, un pignon intermédiaire 360 monté libre en rotation sur un arbre parallèle 60 et un pignon de transmission 330T est lié en rotation à l'arbre intermédiaire 330 qui le porte.

Les nombres de dents des pignons de la cascade sont choisis de manière à ce que l'arbre intermédiaire 330 soit lié en rotation à l'arbre moteur d'entrée 310 pour être entraîné en rotation à une vitesse supérieure à celle de ce dernier.

Les cinquième et sixième rapports supplémentaires de marche avant sont réalisés par la cascade de pignons et par les couples formés respectivement par le premier pignon intermédiaire 335 et le pignon récepteur de troisième rapport 323, et par le second pignon intermédiaire 336 et le pignon récepteur de quatrième rapport de marche avant 324.

Afin d'assurer la sélection du cinquième ou du sixième rapport de marche avant, l'arbre intermédiaire 330 porte un baladeur coulissant B5-6 disposé entre les pignons intermédiaires 335 et 336. Le baladeur B5-6 est susceptible de lier en rotation l'un ou l'autre des pignons intermédiaires 335 ou 336 sous l'action d'une fourchette de commande F5-6.

La commande des changements de rapports des différents modes de réalisation des boîtes de vitesses qui viennent d'être décrits peut être réalisée par tout moyen classique connu et ne sera pas décrite ici plus en détail.

## Revendications

1. Boîte de vitesses du type comportant un arbre moteur d'entrée (10) et un arbre parallèle récepteur de sortie (20) portant chacun respectivement des pignons moteurs (11, 12, 13, 14) et des pignons récepteurs (21, 22, 23, 24) qui engrènent par paires (11-21, 12-22, 13-23, 14-24) pour constituer des couples de pignons moteur et récepteur dont chacun réalise un rapport de transmission entre l'arbre d'entrée (10) et l'arbre de sortie (20), l'un des deux pignons de chacun des couples étant lié en rotation avec l'arbre (10) qui le porte et l'autre des deux pignons étant monté libre en rotation sur l'arbre (20) qui le porte et auquel il peut être lié en rotation pour réaliser un rapport de transmission, et du type comportant un arbre intermédiaire (30), parallèle aux arbres d'entrée et de sortie, qui porte au moins un pignon intermédiaire (35) qui engrène avec un (13) desdits pignons moteurs, ou récepteurs, qui est lié en rotation à l'arbre (10) moteur, ou récepteur, qui le porte, l'autre arbre récepteur (20), ou moteur, étant lié en rotation à l'arbre intermédiaire (30) de manière à tourner dans le même sens, ledit pignon intermédiaire (35) étant monté libre en rotation sur l'arbre intermédiaire (30) qui le porte et auquel il peut être lié en rotation pour réaliser au moins un rapport supplémentaire de transmission, caractérisée en ce que les moyens de transmission gui assurent la liaison en rotation de l'arbre intermédiaire audit autre arbre récepteur, ou moteur, comprennent une chaîne de transmission (50, 150, 250).

2. Boîte de vitesses selon la revendication 1, caractérisée en ce que l'arbre intermédiaire porte deux pignons intermédiaires (35, 36) dont chacun engrène respectivement avec l'un de deux pignons moteurs (13, 14) liés en rotation à l'arbre d'entrée (10) qui les porte, l'arbre intermédiaire (30) étant lié en rotation à l'arbre de sortie (20) pour réaliser deux rapports supplémentaires de transmission.

3. Boite de vitesses selon la revendication 2, caractérisée en ce que les deux pignons intermédiaires (35, 36) sont identiques aux deux pignons récepteurs (23, 24) portés par l'arbre de sortie (20) qui engrènent avec les deux pignons moteurs (13, 14) avec lesquels engrènent les deux pignons intermédiaires (35, 36), et en ce que l'arbre de sortie (20) est entraîné en rotation par l'arbre intermédiaire (30) à une vitesse supérieure à celle de ce dernier.

4. Boîte de vitesses selon la revendication 3, caractérisée en ce que les arbres moteur d'entrée (10) et récepteur de sortie (20) portent chacun quatre pignons moteurs (11, 12, 13, 14), et respectivement récepteurs (21, 22, 23, 24) de marche avant, chacun desdits deux pignons intermédiaires (35, 36) engrenant respectivement avec les pignons moteurs (13, 14) des troisième et quatrième rapports de marche avant pour réaliser un cinquième et un sixième rapports supplémentaires de marche avant.

5. Boîte de vitesses selon la revendication 4, caractérisée en ce que le premier (35) desdits deux pignons intermédiaires réalisant le cinquième rapport de marche avant engrène avec le pignon moteur (13) du troisième rapport de marche avant, et en ce que le second pignon intermédiaire (36) réalisant le sixième rapport de marche avant engrène avec le pignon moteur (14) du quatrième rapport de marche avant.

6. Boîte de vitesses selon la revendication 2, caractérisée en ce que un premier (135) desdits deux pignons intermédiaires (135, 136) est identique au pignon récepteur (123) porté par l'arbre de sortie (120) qui engrène avec le pignon moteur (113) avec lequel engrène ledit premier pignon intermédiaire (135), en ce que le second pignon intermédiaire (136) engrène avec un pignon moteur supplémentaire (116) lié en rotation avec l'arbre moteur (110) qui le porte, et en ce que l'arbre de sortie (120) est entraîné en rotation par l'arbre intermédiaire (130) à une vitesse supérieure à celle de ce dernier.

7. Boîte de vitesses selon la revendication 6, caractérisée en ce que les arbres moteurs (110) et récepteurs (120) portent chacun quatre pignons moteurs (111, 112, 113, 114), et respectivement récepteurs (211, 212, 213, 214), de marche avant, en ce que ledit premier pignon intermédiaire (135) engrène avec le pignon moteur (113) du troisième rapport de marche avant pour réaliser un cinquième rapport de marche avant, et en ce que ledit second pignon intermédiaire (136) engrène avec ledit pignon moteur supplémentaire (116) pour réaliser un sixième rapport de marche avant.

8. Boîte de vitesses selon la revendication 1, caractérisée en ce que l'arbre intermédiaire (230) porte un premier pignon intermédiaire (231) qui engrène avec un pignon moteur (212) lié en rotation à l'arbre d'entrée (210), ce pignon moteur (212) engrènant avec un pignon récepteur (222) porté par l'arbre de sortie (220) pour réaliser un rapport de marche avant, en ce que ledit premier pignon intermédiaire (231) comporte un nombre de dents supérieur au nombre de dents dudit pignon moteur (212), et en ce que l'arbre de sortie (220) est entraîné en rotation par l'arbre intermédiaire (230) à une vitesse inférieure à celle de ce dernier pour réaliser un rapport supplémentaire de transmission de rang inférieur à celui dudit rapport de marche avant.

9. Boîte de vitesses selon la revendication 8, caractérisée en ce que l'arbre intermédiaire (230) porte un second pignon intermédiaire (230AR) qui engrène avec un pignon de marche arrière (240Ar) lié en rotation à un arbre de marche arrière (240) qui le porte, ledit pignon de marche arrière (240AR) engrènant avec ledit pignon moteur (212) lié en rotation à l'arbre d'entrée (210).

10. Boîte de vitesses selon l'une des revendications 8 ou 9, caractérisée en ce que ledit pignon moteur (212) est le pignon du second rapport de marche avant, ledit rapport supplémentaire de marche avant étant le premier rapport de marche avant.

11. Boîte de vitesses selon la revendication 1, caractérisée en ce que l'arbre intermédiaire (330) porte deux pignons intermédiaires (335, 336) dont chacun engrène respectivement avec l'un de deux pignons récepteurs (323, 324) liés en rotation à l'arbre de sortie (320) qui les porte, l'arbre intermédiaire (330) étant lié en rotation à l'arbre d'entrée (310), pour réaliser deux rapports supplémentaires de transmission.

12. Boîte de vitesses selon la revendication 11, caractérisé en ce que les deux pignons intermédiaires (335, 336) sont identiques aux deux pignons moteurs (313, 314) portés par l'arbre d'entrée qui engrènent avec les deux pignons récepteurs (323, 324) avec lesquels engrènent les deux pignons intermédiaires (335, 336), et en ce que l'arbre intermédiaire (330) est entraîné en rotation par l'arbre d'entrée (310) à une vitesse supérieure à celle de ce dernier.

13. Boîte de vitesses selon la revendication 12, caractérisée en ce que les arbres moteur d'entrée (310) et récepteur de sortie (320) portent chacun quatre pignons moteurs (311, 312, 313, 314), et respectivement récepteurs (321, 322, 323, 324), de marche avant, chacun desdits deux pignons intermédiaires (335, 336) engrenant respectivement avec les pignons récepteurs (323, 324) des troisième et quatrième rapports de marche avant pour réaliser un cinquième et un sixième rapports supplémentaires de marche avant.

## Claims

1. Gear box of the type comprising a driving input shaft (10) and a parallel driven output shaft (20) each respectively supporting driving pinions (11, 12, 13, 14) and driven pinions (21, 22, 23, 24) which mesh in pairs (11-21, 12-22, 13-23, 14-24) in order to constitute pairs of driving and driven pinions whereof each produces a transmission ratio between the input shaft (10) and the output shaft (20), one of the two pinions of each of the pairs being rotationally connected to the shaft (10) which supports it and the other of the two pinions being mounted to rotate freely on the shaft (20) which supports it and to which it can be rotationally connected in order to produce a transmission ratio, and of the type comprising an intermediate shaft (30), parallel to the input and output shafts, which supports at least one intermediate pinion (35) which meshes with one (13) of said driving or driven pinions, which is rotationally connected to the driving shaft (10) or driven shaft, which supports it, the other driven shaft (20) or driving shaft, being rotationally connected to the intermediate shaft (30) in order to rotate in the same direction, said intermediate pinion (35) being mounted to rotate freely on the intermediate shaft (30) which supports it and to which it can be rotationally connected in order to produce at least one additional transmission ratio, characterised in that the transmission means which ensure the rotary connection of the intermediate shaft with said driven or driving shaft, comprise a transmission chain (50, 150, 250).

2. Gear box according to Claim 1, characterised in that the intermediate shaft supports two intermediate pinions (35, 36) whereof each meshes respectively with one of two driving pinions (13, 14) rotationally connected to the input shaft (10) which supports them, the intermediate shaft (30) being rotationally connected to the output shaft (20) in order to produce two additional transmission ratios.

3. Gear box according to Claim 2, characterised in that the two intermediate pinions (35, 36) are identical to the two driven pinions (23, 24) supported by the output shaft (20), which mesh with the two driving pinions (13, 14) with which the two intermediate pinions (35, 36) mesh, and in that the output shaft (20) is driven in a rotary manner by the intermediate shaft (30) at a speed higher than that of the latter.

4. Gear box according to Claim 3, characterised in that the driving input shaft (10) and driven output shaft (20) each support four forward gear driving pinions (11, 12, 13, 14), and respectively driven pinions (21, 22, 23, 24), each of the said two intermediate pinions (35, 36) meshing respectively with the driving pinions (13, 14) of the third and fourth forward gear ratios in order to produce a fifth and a sixth additional forward gear ratios.

5. Gear box according to Claim 4, characterised in that the first (35) of said two intermediate pinions producing the fifth forward gear ratio meshes with the driving pinion (13) of the third forward gear ratio, and in that the second intermediate pinion (36) producing the sixth forward gear ratio meshes with the driving pinion (14) of the fourth forward gear ratio.

6. Gear box according to Claim 2, characterised in that a first (135) of said two intermediate pinions (135, 136) is identical to the driven pinion (123) supported by the output shaft (120) which meshes with the driving pinion (113) with which said first intermediate pinion (135) meshes, in that the second intermediate pinion (136) meshes with an additional driving pinion (116) rotationally connected to the drive shaft (110) which supports it, and in that the output shaft (120) is driven in a rotary manner by the intermediate shaft (130) at a speed higher than that of the latter.

7. Gear box according to Claim 6, characterised in that the driving shaft (170) and driven shaft (120) each support four forward gear driving pinions (111, 112, 113, 114), and respectively driven pinions (211, 212, 213, 214), in that said first intermediate pinion (135) meshes with the driving pinion (113) of the third forward gear ratio in order to produce a fifth forward gear ratio, and in that said second intermediate pinion (136) meshes with said additional driving pinion (116) in order to produce a sixth forward gear ratio.

8. Gear box according to Claim 1, characterised in that the intermediate shaft (230) supports a first intermediate pinion (231) which meshes with a driving pinion (212) rotationally connected to the input shaft (210), this driving pinion (212) meshing with a driven pinion (222) supported by the output shaft (220) in order to produce a forward gear ratio, in that said first intermediate pinion (231) comprises a number of teeth greater than the number of teeth of said driving pinion (272), and in that the output shaft (220) is driven in a rotary manner by the intermediate shaft (230) at a speed lower than that of the latter in order to produce an additional transmission ratio of lower order than that of said forward gear ratio.

9. Gear box according to Claim 8, characterised in that the intermediate shaft (230) supports a second intermediate pinion (230AR) which meshes with a reverse gear pinion (240AR) rotationally connected to a reverse gear shaft (240) which supports it, said reverse gear pinion (240AR) meshing with said driving pinion (212) rotationally connected to the input shaft (210).

10. Gear box according to one of Claims 8 or 9, characterised in that said driving pinion (272) is the pinion of the second forward gear ratio, said additional forward gear ratio being the first forward gear ratio.

11. Gear box according to Claim 1, characterised in that the intermediate shaft (330) supports two intermediate pinions (335, 336) whereof each meshes respectively with one of the two driven pinions (323, 324) rotationally connected to the output shaft (320) which supports them, the intermediate shaft (330) being rotationally connected to the input shaft (310), in order to produce two additional transmission ratios.

12. Gear box according to Claim 11, characterised in that the two intermediate pinions (335, 336) are identical to the two driving pinions (313, 314) supported by the input shaft, which mesh with the two driven pinions (323, 324), with which the two intermediate pinions (335, 336) mesh, and in that the intermediate shaft (330) is driven in a rotary manner by the input shaft (310) at a speed greater than that of the latter.

13. Gear box according to Claim 12, characterised in that the driving input shaft (310) and driven output shaft (320) each support four forward gear driving pinions (311, 312, 313, 314), and respectively driven pinions (321, 322, 323, 324), each of said two intermediate pinions (335, 336) meshing respectively with the driven pinions (323, 324) of the third and fourth forward gear ratios in order to produce a fifth and a sixth additional forward gear ratio.

## Patentansprüche

1. Schaltgetriebe des Typs mit einer eingangsseitigen antreibenden Welle (10) und einer parallelen ausgangsseitigen angetriebenen Welle (20), die jede jeweils antreibende Ritzel (11, 12, 13, 14) und angetriebene Ritzel (21, 22, 23, 24) tragen, welche paarweise (11-21, 12-22, 13-23, 14-24) im Zahneingriff sind, um Paare aus antreibenden und angetriebenen Ritzeln zu bilden, von denen jedes ein Übertragungsverhältnis zwischen der eingangsseitigen Welle (10) und der ausgangsseitigen Welle (20)realisiert, wobei das eine der beiden Ritzel jedes der Paare drehfest mit der Welle (10) ist, die es trägt, und das andere der beiden Ritzel frei drehbar auf der Welle (20) angebracht ist, die es trägt und zu der es drehfest gehalten werden kann, um ein Übertragungsverhältnis zu realisieren, und des Typs mit einer Zwischenwelle (30), parallel zur eingangsseitigen und zur ausgangsseitigen Welle, die wenigstens ein Zwischenritzel (35) trägt, das im Zahneingriff mit einem (13) der antreibenden oder angetriebenen Ritzel ist, das drehfest auf der antreibenden Welle (10), oder der angetriebenen, ist, die es trägt, wobei die andere angetriebene Welle (20), oder die antreibende, drehfest zur Zwischenwelle (30) ist, so daß sie sich im selben Sinn dreht, wobei das Zwischenritzel (35) frei drehbar auf der Zwischenwelle (30) angebracht ist, die es trägt und zu der es drehfest gehalten werden kann, um wenigstens ein zusätzliches Übertragungsverhältnis zu realisieren, dadurch gekennzeichnet, daß die Übertragunsgmittel, die die Drehverbindung der Zwischenwelle mit der anderen angetriebenen oder antreibenden Welle gewährleisten, eine Übertragungskette (50, 150, 250) aufweisen.

2. Gangschaltgetriebe nach Anspruch 1, dadurch gekennzeichnet, daß die Zwischenwelle zwei Zwischenritzel (35, 36) trägt, wobei jedes mit jeweils einem der beiden antreibenden Ritzel (13, 14) im Zahneingriff ist, die drehfest mit der eingangsseitigen Welle (10), welche sie trägt, sind, wobei die Zwischenwelle (30) drehfest zur ausgangsseitigen Welle (20) ist, um zwei zusätzliche Übertragungsverhältnisse zu realisieren.

3. Gangschaltgetriebe nach Anspruch 2, dadurch gekennzeichnet, daß die zwei Zwischenritzel (35, 36) identisch mit den zwei angetriebenen Ritzeln (23, 24), getragen von der ausgangsseitigen Welle (20), sind, welche im Zahneingriff mit den beiden antreibenden Ritzeln (13, 14) sind, mit denen die beiden Zwischenritzel (35, 36) im Zahneingriff sind, und daß die ausgangsseitige Welle (20) durch die Zwischenwelle (30) mit einer Geschwindigkeit größer als der der letzteren drehangetrieben wird.

4. Gangschaltgetriebe nach Anspruch 3, dadurch gekennzeichnet, daß die eingangsseitige antreibende (10) und die ausgangsseitige angetriebene Welle (20) jede vier antreibende (11, 12, 13, 14) und bzw. angetriebene Ritzel (21, 22, 23, 24) für Vorwärtsgänge tragen, wobei jedes der beiden Zwischenritzel (35, 36) jeweils im Zahneingriff mit den antreibenden Ritzeln (13, 14) des dritten und vierten Verhältnisses für Vorwärtsgänge sind, um ein fünftes und ein sechstes zusätzliches Verhältnis für Vorwärtsgänge zu realisieren.

5. Gangschaltgetriebe nach Anspruch 4, dadurch gekennzeichnet, daß das erste (35) der beiden Zwischenritzel, das das fünfte Verhältnis für Vorwärtsgänge realisiert, im Zahneingriff mit dem antreibenden Ritzel (13) des dritten Verhältnisses für Vorwärtsgänge ist und daß das zweite Zwischenritzel (36), das das sechste Verhältnis für Vorwärtsgänge realisiert, im Zahneingriff mit dem antreibenden Ritzel (14) für das vierte Verhältnis für Vorwärtsgänge ist.

6. Gangschaltgetriebe nach Anspruch 2, dadurch gekennzeichnet, daß ein erstes (135) der beiden Zwischenritzel (135, 136) identisch mit dem angetriebenen Ritzel (123), getragen von der ausgangsseitigen Welle (120) ist, das mit dem antreibenden Ritzel (113) im Zahneingriff ist, mit dem das erste Zwischenritzel (135) im Zahneingriff ist, und daß das zweite Zwischenritzel (136) mit einem zusätzlichen antreiben Ritzel (116), drehfest mit der antreibenden Welle (110), welche es trägt, im Zahneingriff ist, und daß die ausgangsseitige Welle (120) durch die Zwischenwelle (130) mit einer Geschwindigkeit größer als der der letzteren drehangetrieben wird.

7. Gangschaltgetriebe nach Anspruch 6, dadurch gekennzeichnet, daß die antriebende (10) und die angetriebene Welle (20) jede view antreibende (111, 112, 113, 114) und bzw. angetriebene Ritzel (211, 212, 213, 214) für Vorwärtsgänge trägt, daß das erste Zwischenritzel (135) im Zahneingriff mit dem antreibenden Ritzel (113) des dritten Verhältnisses für Vorwärtsgänge ist, um ein fünftes Verhältnis für Vorwärtsgänge zu realisieren und daß das zweite Zwischenritzel (136) mit dem zusätzlichen antreibenden Ritzel (116) im Zahneingriff ist, um ein sechstes Verhältnis für Vorwärtsgänge zu realisieren.

8. Schaltgetriebe nach Anspruch 1, dadurch gekennzeichnet, daß die Zwischenwelle (230) ein erstes Zwischenritzel (231) trägt, welches mit einem antreibenden Ritzel (212), drehfest mit der eingangsseitigen Welle (210), im Zahneingriff ist, wobei dieses antreibende Ritzel (212) mit einem angetriebenen Ritzel (222), getragen von der ausgangsseitigen Welle (220), im Zahneingriff ist, um ein Verhältnis für Vorwärtsgänge zu realisieren, daß das erste Zwischenritzel (231) eine Anzahl von Zähnen größer als die Anzahl der Zähne des antreibenden Ritzels (212) umfaßt und daß die ausgangsseitige Welle (220) durch die Zwischenwelle (230) auf eine Geschwindigkeit geringer als die der letzteren drehangetrieben wird, um ein zusätzliches Übertragungsverhältnis geringerer Stufe zu der des Verhältnisses für Vorwärtsgänge zu realisieren.

9. Gangschaltgetriebe nach Anspruch 8, dadurch gekennzeichnet, daß die Zwischenwelle (230) ein zweites Zwischenritzel (230AR) trägt, das im Zahneingriff mit einem Ritzel für den Rückwärtsgang (240AR), drehfest mit einer Welle für den Rückwärtsgang (240), welche es trägt, ist, wobei das Ritzel für den Rückwärtsgang (240AR) mit dem antreibenden Ritzel (212), das drehfest mit der eingangsseitigen Welle (210) ist, im Zahneingriff ist.

10. Gangschaltgetriebe nach einem der Ansprüche 8 oder 9, dadurch gekennzeichnet, daß das antreibende Ritzel (212) das Ritzel des zweiten Verhältnisses für Vorwärtsgänge ist, wobei das zusätzliche Verhältnis für Vorwärtsgänge das erste Verhältnis für Vorwärtsgänge ist.

11. Gangschaltgetriebe nach Anspruch 1, dadurch gekennzeichnet, daß die Zwischenwelle (330) zwei Zwischenritzel (335, 336) trägt, von denen jedes jeweils mit einem der beiden angetriebenen Ritzel (323, 324), drehfest mit der ausgangsseitigen Welle (320), welche sie trägt, im Zahneingriff ist, wobei die Zwischenwelle (330) drehfest mit der eingangsseitigen Welle (310) ist, um zwei zusätzliche Übertragungsverhältnisse zu realisieren.

12. Gangschaltgetriebe nach Anspruch 11, dadurch gekennzeichnet, daß die beiden Zwischenritzel (335, 336) identisch mit den beiden antreibenden Ritzeln (313, 314), getragen von der eingangsseitigen Welle, sind, welche mit den beiden angetriebenen Ritzeln (323, 324) im Zahneingriff sind, mit denen die zwei Zwischenritzel (335, 336) im Zahneingriff sind, und daß die Zwischenwelle (330) durch die eingangsseitige Welle (310) mit einer Geschwindigkeit größer als derjenigen der letzteren drehangetrieben wird.

13. Gangschaltgetriebe nach Anspruch 12, dadurch gekennzeichnet, daß die eingangsseitige antreibende (310) und die ausgangsseitige angetriebene Welle (320) jede vier antreibende (311, 312, 313, 314) und bzw. angetriebene Ritzel (321, 322, 323, 324) für Vorwärtsgänge tragen, wobei jedes der zwei Zwischenritzel (335, 336) jeweils mit den angetriebenen Ritzeln (323, 324) des dritten und vierten Verhältnisses für Vorwärtsgänge im Zahneingriff sind, um ein zusätzliches fünftes und ein sechstes Verhältnis für Vorwärtsgänge zu realisieren.
